# EUROPÄISCHE PATENTSCHRIFT

(11) **EP 2 653 296 B1**
(45) Veröffentlichungstag und Bekanntmachung des Hinweises auf die Patenterteilung: **14.12.2016**
(21) Anmeldenummer: 12002800.6
(22) Anmeldetag: 20.04.2012
(51) Int. Cl.: B29C 70/44, B29C 70/54, B29D 99/00, B29L 31/08

(54) **Vakuuminfusionsverfahren zur Herstellung eines Windenergieanlagenbauteils**
Vacuum infusion method for producing a wind turbine concept
Procédé d'injection sous vide pour la fabrication d'un composant d'une éolienne

(43) Veröffentlichungstag der Anmeldung: 23.10.2013
(73) Patentinhaber: Nordex Energy GmbH, 22419 Hamburg (DE)
(72) Erfinder: Austinat, Dirk, 17126 Jarmen (DE); Malischewski, Mathias, 18057 Rostock (DE)
(74) Vertreter: Hauck Patentanwaltspartnerschaft mbB

(56) Entgegenhaltungen:
- EP-A1- 2 226 186
- WO-A1-2006/064167
- FR-A1- 2 673 571
- US-A- 5 441 692
- US-A- 5 863 452

## Beschreibung

Die Erfindung betrifft ein Vakuuminfusionsverfahren zur Herstellung eines Windenergieanlagenbauteils, bei dem eine Form für das Windenergieanlagenbauteil bereitgestellt, ein Fasermaterial in die Form eingelegt und die Form mit einer Vakuumhülle geschlossen wird. Anschließend wird in der Form ein Unterdruck erzeugt und ein flüssiges Kunststoffmaterial wird in die Form infundiert. Nach dem Aushärten des flüssigen Kunststoffmaterials kann das auf diese Weise hergestellte Windenergieanlagenbauteil der Form entnommen werden.

Derartige Vakuuminfusionsverfahren werden zur Herstellung von Windenergieanlagenbauteilen routinemäßig eingesetzt und erlauben eine Herstellung auch großer Bauteile mit komplexen Geometrien. Durch optimalen Einsatz geeigneter Fasermaterialien entstehen hoch belastbare Bauteile. Allerdings ist es insbesondere bei sehr großen Bauteilen schwierig, die Verfahren mit der erforderlichen Präzision auszuführen, um in jedem Einzelfall ein optimales Bauteil zu erhalten. Beispielsweise kann es in der Praxis zu Lufteinschlüssen oder sogenannten Harznestern kommen, was aufwendige Nacharbeiten erforderlich oder das Bauteil im schlimmsten Fall unbrauchbar macht. Außerdem ist es insbesondere bei großen Bauteilen und komplexen Bauteilgeometrien schwierig, überall den gewünschten Faservolumengehalt einzuhalten.

Aus der Druckschrift EP 2 335 909 A1 ist ein Verfahren zur Herstellung eines Rotorblatts bekannt geworden, bei dem der Anguss des flüssigen Kunststoffmaterials sehr gezielt über eine Vielzahl von in die Form integrierten Angusskanälen erfolgt. Die Anordnung der Angusskanäle ist dabei auf die Durchlässigkeit des in der Form befindlichen Fasermaterials abgestimmt, um eine möglichst gleichmäßige Durchtränkung des Bauteils zu erzielen.

Außerdem ist es bekannt geworden, Bauteile aus Faserverbundwerkstoffen unter erhöhter Temperatur und erhöhtem Druck in Autoklaven auszuhärten. Hierfür werden in der Regel sogenannte Prepregs verwendet, d. h. vor dem Anordnen in einer Form mit dem flüssigen Kunststoffmaterial durchtränkte Faserpakete. Diese Verfahren stoßen jedoch bei großen Bauteilen an ihre Grenzen und sind dann in der Regel nicht wirtschaftlich durchführbar. Aus diesem Grund schlägt die Druckschrift US 2002/0022422 A1 vor, die Bauteile nicht in einem Autoklaven, sondern mit einem abgewandelten Vakuuminfusionsverfahren herzustellen. Hierzu wird das Fasermaterial auf einer Grundplatte oder in einer Form angeordnet und von einer doppelwandigen Vakuumhülle umgeben. Es wird vorgeschlagen, zwischen den beiden Lagen der doppelwandigen Hülle ein geringeres Vakuum zu erzeugen.

Aus der Druckschrift US2005/0253309 A1 ist ein anderes Verfahren bekannt geworden, bei dem ein Prepreg von einer doppelwandigen Vakuumhülle eingeschlossen wird. Zwischen den beiden Lagen der Vakuumhülle befindet sich eine perforierte Stahlhaube. Durch Erzeugen eines Unterdrucks zwischen den beiden Lagen sollen die von der inneren Lage auf das Prepreg ausgeübten Kompressionskräfte verringert werden, damit Lufteinschlüsse entweichen können. Anschließend wird der Zwischenraum zwischen den beiden Lagen belüftet und das Bauteil wird unter erhöhter Temperatur ausgehärtet.

Aus der Druckschrift EP 2 221 167 B1 ist ein anderes Verfahren zur Verarbeitung von Prepregs bekannt geworden. Bei diesem bekannten Verfahren ist oberhalb des Prepregs eine Druckplatte und in einem Abstand von der Druckplatte eine Brückenkonstruktion angeordnet. Zwischen der Brückenkonstruktion und der Druckplatte befindet sich ein Druckbeutel. Die gesamte Anordnung ist von einer Vakuumhülle eingeschlossen. Durch Erzeugen eines Überdrucks in dem Druckbeutel kann das Prepreg komprimiert werden.

Aus der Druckschrift FR 2 673 571 A1 ist ein Vakuuminfusionsverfahren mit den Merkmalen des Oberbegriffs des Anspruchs 1 bekannt geworden.

Davon ausgehend ist es die Aufgabe der Erfindung, ein Vakuuminfusionsverfahren zur Herstellung eines Windenergieanlagenbauteils zur Verfügung zu stellen, mit dem eine gleichmäßigere Bauteilqualität erzielbar ist.

Diese Aufgabe wird gelöst durch das Vakuuminfusionsverfahren mit den Merkmalen des Anspruchs 1. Vorteilhafte Ausgestaltungen sind in den sich anschließenden Unteransprüchen angegeben.

Das Vakuuminfusionsverfahren dient zur Herstellung eines Windenergieanlagenbauteils und weist die folgenden Schritte auf:
- Bereitstellen einer Form,
- Einlegen eines Fasermaterials in die Form,
- Schließen der Form mit einer Vakuumhülle,
- Erzeugen eines Unterdrucks in der Form,
- Infusion eines flüssigen Kunststoffmaterials in die Form,
- Aushärten des flüssigen Kunststoffmaterials,
- Umgeben der Vakuumhülle mit einer Druckhülle,
- Abdichten der Druckhülle gegenüber der Form,
- Erzeugen eines Überdrucks innerhalb der Druckhülle.

Die Schritte des Verfahrens können grundsätzlich und soweit dies technisch möglich ist in beliebiger Reihenfolge oder auch teilweise gleichzeitig ausgeführt werden. Wegen der begrenzten Topfzeit des flüssigen Kunststoffmaterials kann es sinnvoll sein, bestimmte Verfahrensschritte schon vor dem Beginn der Infusion des Kunststoffmaterials in die Form abzuschließen. Dies betrifft insbesondere das Umgeben der Vakuumhülle mit der Druckhülle und das Abdichten der Druckhülle gegenüber der Form.

Die Form weist eine Innenseite auf, deren Oberfläche einer Oberfläche des herzustellenden Windenergieanlagenbauteils entspricht. Die Form kann beispielsweise aus Metall oder einem Verbundwerkstoff bestehen und Verstärkungen oder eine Stützkonstruktion aufweisen, damit die Form auch unter den während des Verfahrens auftretenden Belastungen durch die unterschiedlichen Drücke und Gewichtskräfte ihre exakte Gestalt behält.

Das in die Form eingelegte Fasermaterial kann beispielsweise Glasfasern, Kohlenstofffasern und/oder Aramidfasern aufweisen. Insbesondere können Gelege oder Gewebe derartiger Fasern verwendet werden, um Vorgaben hinsichtlich der Anzahl, Orientierung und genauen Anordnung der Fasern einzuhalten.

Anschließend wird die Form mit einer Vakuumhülle geschlossen, d. h. der Innenraum der Form, in dem das Windenergieanlagenbauteil entsteht, wird von der Umgebung luftdicht abgeschlossen, so dass in der Form ein Vakuum erzeugt werden kann. Hierzu wird die in der Form enthaltene Luft über geeignete Absaugkanäle abgesaugt. Die Vakuumhülle kann insbesondere eine Vakuumfolie sein. Die Ränder der Vakuumhülle können zum Schließen der Form beispielsweise mit Rändern der Form verklebt werden, insbesondere mit hierfür geeigneten Klebebändern.

Beim Erzeugen eines Unterdrucks wird der Druck innerhalb der Form gegenüber dem Umgebungsdruck abgesenkt. Der anschließend in der Form vorliegende, absolute Druck wird nachfolgend als p₀ bezeichnet. Häufig wird der Druck in der Form so weit abgesenkt, dass ein mehr oder weniger vollständiges Vakuum entsprechend einem absoluten Druck p₀ beispielsweise im Bereich von 10 mbar bis 50 mbar erzielt wird. Es kann jedoch auch mit einem höheren absoluten Druck innerhalb der Form von beispielsweise bis zu 100 mbar, bis zu 200 mbar oder bis zu 300 mbar gearbeitet werden.

Das flüssige Kunststoffmaterial ist beispielsweise ein Gemisch aus Harz und Härter, insbesondere auf Polyester-, Polyurethan- oder Epoxidbasis. Das flüssige Kunststoffmaterial härtet aufgrund einer chemischen Reaktion aus. Je nach verwendetem Kunststoffmaterial findet diese Reaktion bei Raumtemperatur, gegebenenfalls unter Wärmeentwicklung, statt. Es ist ebenfalls möglich, das flüssige Kunststoffmaterial zu temperieren, sowohl durch Kühlen als auch durch Erhitzen, beispielsweise mithilfe einer Kühl- oder Heizeinrichtung an oder in der Form.

Die Infusion des flüssigen Kunststoffmaterials in die Form erfolgt in der Regel über geeignete Angusskanäle oder -schläuche, die von einem Vorratsbehälter, in dem das flüssige Kunststoffmaterial angeordnet ist, in die Form führen. Die Angusskanäle können insbesondere in unteren Bereichen der Form angeordnet sein, während die Absaugung der in der Form enthaltenen Luft bevorzugt über an der Oberseite der Form befindliche Absaugkanäle vorgenommen wird. Dadurch werden Lufteinschlüsse in der Form von den sich ausbildenden Fließfronten optimal zu den Absaugkanälen transportiert. Die gleichmäßige Verteilung des Kunststoffmaterials in der Form kann durch geeignete Maßnahmen wie insbesondere die gezielte Anordnung von Fließhilfen unterstützt werden.

Nach dem Aushärten des flüssigen Kunststoffmaterials kann das Windenergieanlagenbauteil aus der Form entnommen werden. Um diese Entnahme zu ermöglichen, können geeignete Trennmittel, beispielsweise Wachs oder Abreißgewebe, verwendet werden.

Bei der Erfindung wird die Vakuumhülle mit einer Druckhülle umgeben. Die Druckhülle wird gegenüber der Form abgedichtet. Dies bedeutet, dass zwischen der Vakuumhülle und der Druckhülle ein luftdicht abgeschlossenes Volumen entsteht. Ein in diesem Volumen erzeugter Überdruck wirkt wegen der genannten Anordnung der Druckhülle unmittelbar auf die Vakuumhülle und das in der Form befindliche Windenergieanlagenbauteil ein. Die Druckhülle kann ganz oder teilweise transparent sein, beispielsweise kann sie ein oder mehrere Sichtfenster aufweisen. Dadurch ist es möglich, insbesondere den Infusionsvorgang zu beobachten.

Grundsätzlich ist es auch möglich, die Vakuumhülle erst nach Beendigung des Infusionsvorgangs mit der Druckhülle zu umgeben. Auf diese Weise kann der Infusionsvorgang in gewohnter Weise durch eine Sichtkontrolle überwacht werden, bevor das Bauteil mit der Vakuumhülle mit der Druckhülle umgeben wird.

Innerhalb der Druckhülle, also in dem zwischen Druckhülle und Vakuumhülle befindlichen Volumen, wird ein Überdruck erzeugt. Mit der Bezeichnung Überdruck ist gemeint, dass der Druck gegenüber dem Umgebungsdruck erhöht ist. Der absolute Druck innerhalb der Druckhülle wird nachfolgend mit p₂ bezeichnet.

Durch die die Vakuumhülle umgebende Druckhülle und den innerhalb der Druckhülle erzeugten Überdruck kann auf sehr einfache Weise ein zusätzlicher Druck während und/oder nach der Infusion des flüssigen Kunststoffinaterials auf das Windenergieanlagenbauteil ausgeübt werden. Dadurch kann der sich ausbildende Faservolumengehalt des Bauteils gezielt beeinflusst werden. Insbesondere können Windenergieanlagenbauteile mit relativ hohem Faservolumengehalt in zuverlässiger und kontrollierbarer Weise hergestellt werden. Außerdem können die Bedingungen, unter denen das Verfahren abläuft, durch Verwendung der Druckhülle besser kontrolliert werden. Auf diese Weise können schon bei Verwendung eines geringen Überdrucks insbesondere die Auswirkungen von Luftdruckschwankungen minimiert werden.

In einer Ausgestaltung werden zum Abdichten der Druckhülle gegenüber der Form ein Rand der Druckhülle und ein Rand der Form aneinandergepresst. Dabei kann zwischen den genannten Rändern ein Dichtungsmaterial angeordnet werden. Anders als bei einer Abdichtung der weit verbreiteten Vakuumfolien, die durch das Vakuum an die Form herangepresst werden, ist die Abdichtung der Druckhülle gegenüber der Form schwieriger, weil ein innerhalb der Druckhülle aufgebauter Überdruck leicht zu Ablösungen der Druckhülle von der Form führt. Insbesondere ist es in der Regel nicht äusreichend, die Druckhülle mit einem Klebeband oder durch eine sonstige Verklebung zu fixieren, auch wenn diese Maßnahmen ergänzend sinnvoll sein können. Das Pressen der genannten Ränder aneinander kann insbesondere mit Hilfe von mit der Form verschraubten Spannbalken, mit Klemmen oder Klammem erfolgen. Beispielsweise können Klemmen verwendet werden, die die beiden Ränder u-förmig umschließen, auch in Form langgestreckter U-Profile. Auf diese Weise wird eine zuverlässige und leicht herzustellende Abdichtung erreicht.

In einer Ausgestaltung weist die Druckhülle ein luftdichtes, flexibles Material auf. Das Material kann beispielsweise eine reißfeste Folie sein oder ein Gewebe. Das flexible Material kann eine Verstärkung aufweisen, insbesondere mit Verstärkungsfasern. Das flexible Material kann eine Beschichtung aufweisen, um die Luftdichtigkeit zu erzielen. Die Verwendung eines flexiblen Materials für die Druckhülle ermöglicht eine einfache Handhabung.

In einer Ausgestaltung weist die Druckhülle einen Deckel oder eine Haube mit einer festen Geometrie auf. Der Deckel oder die Haube kann mit einem Rand auf einen Rand der Form aufgesetzt werden. Der Deckel oder die Haube kann eine Versteifungskonstruktion zum Beispiel aus Metall, Kunststoff oder einem Verbundwerkstoff aufweisen. Der Deckel oder die Haube kann fest mit der Form verbunden werden, beispielsweise durch eine Verschraubung, und dadurch einer Verformung der Form unter dem Einfluss des Überdrucks entgegenwirken. Eine Druckhülle mit fester Geometrie schließt ein stets konstantes Volumen ein, wodurch die Regelung des Überdrucks innerhalb der Druckhülle unter Umständen vereinfacht wird.

Bei der Erfindung wird der Überdruck p₂ und/oder der Unterdruck p₀ derart gesteuert, dass sich eine konstante Druckdifferenz p₂ - p₀ zwischen dem Überdruck p₂ und dem Unterdruck p₀ einstellt. Dies kann insbesondere erreicht werden durch zwei Regelkreise, die den Unterdruck p₀ einerseits und den Überdruck p₂ andererseits auf jeweils konstante Werte regeln. Wird das Verfahren so durchgeführt, dass auch ohne speziellen Regelkreis ein im Wesentlichen konstanter Unterdruck p₀ erzeugt wird, genügt auch eine Regelung des Überdrucks p₂ auf einen konstanten Wert, um die konstante Druckdifferenz p₂ - p₀ zu erhalten. Diese Ausgestaltung beruht auf der Erkenntnis, dass für die auf das Windenergieanlagenbauteil einwirkenden Kompressionskräfte die Druckdifferenz p₂ - p₀ allein maßgeblich ist. Durch Einstellen einer konstanten Druckdifferenz p₂ - p₀ werden daher besonders gleichmäßige Ergebnisse erzielt.

In einer Ausgestaltung wird der Überdruck p₂ innerhalb der Druckhülle erst dann erzeugt, wenn die Infusion des flüssigen Kunststoffmaterials beendet ist. Dadurch werden die Kompressionskräfte auf das Windenergieanlagenbauteil während der Infusion nicht erhöht, wodurch ein gleichmäßiges Durchtränken des Fasermaterials begünstigt wird.

In einer Ausgestaltung wird während der Infusion des flüssigen Kunststoffmaterials ein Unterdruck innerhalb der Druckhülle erzeugt. Durch das Erzeugen eines Unterdrucks in einer Umgebung der Vakuumhülle können die Kompressionskräfte auf das Windenergieanlagenbauteil während der Infusion gezielt verringert werden, wodurch ein gleichmäßiges Durchtränken des Fasermaterials ebenfalls begünstigt werden kann.

In einer Ausgestaltung wird die Infusion des Kunststoffmaterials beendet, wenn eine vorgegebene Menge des Kunststoffmaterials infundiert wurde. Dies ermöglicht die Herstellung von Windenergieanlagenbauteilen mit einem vorgegebenen Faservolumengehalt. Um die Infusion zum richtigen Zeitpunkt zu beenden, kann die infundierte Menge über den Volumenstrom und/oder das Gewicht des infundierten Kunststoffmaterials bzw. des noch in einem Vorratsbehälter befindlichen Rests gemessen werden. Durch das Erzeugen eines Überdrucks in der Druckhülle kann auf diese Weise auch dann ein den Vorgaben entsprechendes Windenergieanlagenbauteil hergestellt werden, wenn die infundierte Menge des flüssigen Kunststoffmaterials bei Umgebungsdruck außerhalb der Vakuumhülle noch nicht ausreicht, um das Fasermaterial vollständig zu durchtränken. Möglich ist zum Beispiel, dass unter diesen Bedingungen die vorgegebene Menge die Form erst bis zu einem gewissen Füllstand unterhalb eines höchsten Punkts der Form ausfüllt und oberhalb davon noch "trockene" Fasern verbleiben. Durch einen in dieser Situation in der Druckhülle erzeugten Überdruck kann das Fasermaterial so stark komprimiert werden, dass eine vollständige Durchtränkung und Benetzung aller Fasern erzielt und damit gleichsam der angestrebte Faservolumengehalt erreicht wird.

In einer Ausgestaltung wird der Überdruck p₂ über einen vorgegebenen Zeitraum auf einem konstanten Wert in einem Bereich von 1,0 bar bis 2,0 bar gehalten. Der genannte absolute Druck p₂ entspricht einem gegenüber dem Umgebungsdruck um etwa 0 bar bis 1 bar erhöhten Druck. Dadurch ist es möglich, das Windenergieanlagenbauteil erheblich zu komprimieren. Bei Verwendung eines nur geringen Überdrucks p₂, der beispielsweise nur um einige Millibar oberhalb des höchsten zu erwartenden Luftdrucks liegt, kann durch das Konstanthalten des Überdrucks wesentlich zu einem gleichmäßigen Prozessverlauf und damit zu einer konstanten hohen Windenergieanlagenbauteilqualität beigetragen werden.

In einer Ausgestaltung wird der Überdruck p₂ so gewählt, dass ein statischer Druck aufgrund der Gewichtskraft des flüssigen Kunststoffmaterials am tiefsten Punkt der Form kompensiert oder überkompensiert wird. Insbesondere bei Windenergieanlagenbauteilen, die sich über eine große Höhe von beispielsweise 1 m oder mehr erstrecken, entstehen durch die Gewichtskraft des flüssigen Kunststoffmaterials erhebliche Druckunterschiede in Abhängigkeit von der Höhe. Diese Druckunterschiede können leicht 100 mbar oder mehr betragen und damit einen wesentlichen Einfluss auf den sich in der Form ausbildenden Faservolumengehalt haben. Wird der Überdruck p₂ entsprechend dem am tiefsten Punkt der Form entstehenden statischen Druck aufgrund der Gewichtskraft des flüssigen Kunststoffmaterials gewählt, wird dieser Effekt kompensiert. Bei einem noch größeren Überdruck p₂ wird der genannte statische Druck überkompensiert. In beiden Fällen entspricht die für die Kompression des Windenergieanlagenbauteils maßgebliche Druckdifferenz p₂ - p₀ selbst am höchsten Punkt des Bauteils dem bei herkömmlichen Herstellungsverfahren üblichen Druck bei Windenergieanlagenbauteilen geringer Höhe, bei denen der genannte statische Druck keine wesentliche Rolle spielt. Insgesamt können durch den genannten Überdruck p₂ auch Windenergieanlagenbauteile mit relativ großen Höhenabmessungen zuverlässig im Vakuuminfusionsverfahren unter gezielter Kontrolle des Faservolumengehalts hergestellt werden.

In einer Ausgestaltung wird zur Prozessoptimierung eine Temperatur eines zur Erzeugung des Überdrucks in die Druckhülle eingebrachten Mediums auf einen vorgegebenen Temperaturwert geregelt. Hierdurch können die Fließeigenschäften und die Aushärtung des flüssigen Kunststoffmaterials beeinflusst werden.

In einer Ausgestaltung des Verfahrens wird ein Vorratsbehälter, aus dem das flüssige Kunststoffmaterial für die Infusion zugeführt wird, luftdicht verschlossen und in dem Vorratsbehälter wird ein definierter Infusionsdruck p₃ erzeugt. Vor der Infusion kann in dem Vorratsbehälter das gesamte für das herzustellende Windenergieanlagenbauteil benötigte flüssige Kunststoffmaterial enthalten sein. Alternativ kann es sich bei dem Vorratsbehälter um einen Pufferbehälter handeln, dem während der Infusion weiteres flüssiges Kunststoffmaterial zugeführt wird. In beiden Fällen führt der definierte Infusionsdruck in dem Vorratsbehälter zu wohl definierten Verhältnissen bei der Infusion des flüssigen Kunststoffmaterials. Der definierte Infusionsdruck kann ein Unterdruck oder ein Überdruck sein, d. h. die Geschwindigkeit der Infusion kann gegenüber einem herkömmlichen, zur Atmosphäre offenen Vorratsbehälter sowohl erhöht als auch verringert werden.

In einer Ausgestaltung wird der Infusionsdruck p₃ und/oder der Unterdruck p₀ derart gesteuert, dass sich eine konstante Druckdifferenz p₃ - p₀ zwischen dem Infusionsdruck p₃ und dem Unterdruck p₀ einstellt. Auf diese Weise wird die für das Einströmen des Kunststoffmaterials maßgebliche Druckdifferenz p₃ - p₀ auf einen gewünschten Wert geregelt. Zu den Möglichkeiten zur Regelung der Druckdifferenz wird auf die vorstehenden Ausführungen zur Druckdifferenz p₂ - p₀ verwiesen, die entsprechend gelten. Insbesondere kann bei Annahme eines konstanten Unterdrucks p₀ bzw. eines auf einen konstanten Wert geregelten Unterdrucks p₀ ausschließlich der Infusionsdruck p₃ einer gesonderten Regelung ausgesetzt werden.

In einer Ausgestaltung ist das Windenergieanlagenbauteil ein Windenergieanlagenrotorblattteil, insbesondere eine Windenergieanlagenrotorblatthalbschale. Andere mit dem Verfahren herzustellende Windenergieanlagenbauteile sind insbesondere vorgefertigte Bauteile von Windenergieanlagenrotorblättern wie zum Beispiel Holme, Stege, Flansch- oder Wurzeleinleger oder sonstige Versteifungselemente für Windenergieanlagenrotorblätter oder sonstige Komponenten einer Windenergieanlage.

Die Erfindung wird nachfolgend anhand eines Ausführungsbeispiels näher erläutert.

Dabei zeigen
- Fig. 1: eine vereinfachte, schematische Darstellung einer Vorrichtung zur Ausführung des erfindungsgemäßen Vakuuminfusionsverfahrens,
- Fig. 2: a-e eine schematische Darstellung des erfindungsgemäßen Vakuuminfusionsverfahrens in einzelnen Verfahrensschritten.

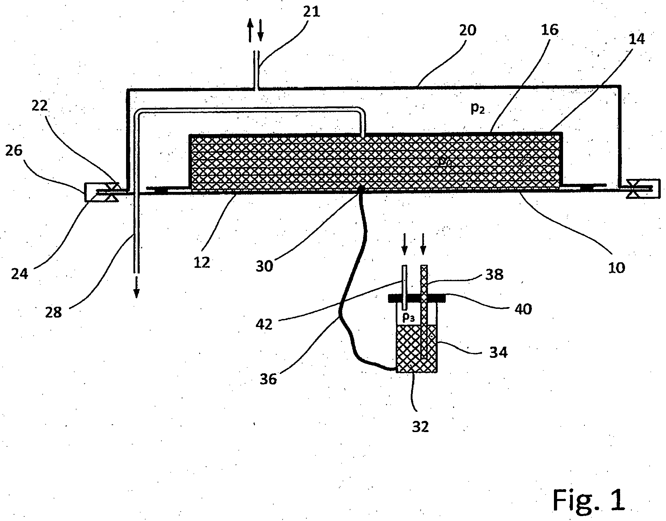

Die Figur 1 zeigt eine Form 10, die eine Innenseite 12 aufweist, deren Formgebung einer Oberfläche des zu fertigenden Windenergieanlagenbauteils entspricht. In der Figur 1 ist die Innenseite 12 geradlinig dargestellt, wie es beispielsweise bei der Herstellung eines Hauptgurts für ein Windenergieanlagenrotorblatt zweckmäßig sein kann. Im Allgemeinen kann die Innenseite 12 eine komplexe Geometrie aufweisen.

In die Form 10 bzw. auf die Innenseite 12 dieser Form sind mehrere Lagen eines Fasermaterials 14 eingelegt.

Die Form 10 ist mit einer Vakuumhülle 16 in Form einer Vakuumfolie verschlossen. Die Ränder der Vakuumhülle 16 sind unter Einsatz eines Dichtungsmittels 18 luftdicht mit der Form 10 verbunden.

Die Vakuumhülle 16 ist von einer Druckhülle 20 umgeben. Die Druckhülle 20 besteht aus einem luftdichten, flexiblen Material und ist in der Figur vereinfacht dargestellt. An die Druckhülle 20 ist eine Druckleitung 21 angeschlossen. Die Ränder 22 der Druckhülle 20 liegen auf Rändern 24 der Form 10 auf. Die Ränder 22 der Druckhülle 20 und die Ränder 24 der Form 10 werden mit u-förmigen Klemmen 26 aneinander gepresst, so dass die Druckhülle 20 gegenüber der Form 10 abgedichtet ist.

Die in der Form 10 im Bereich des Fasermaterials 14 befindliche Luft wird über einen Absaugkanal 28, der mit einem oberen Bereich der Form 10 bzw. der Vakuumhülle 16 verbunden ist, abgesaugt und es wird innerhalb der Form 10, d. h. zwischen der Form 10 und der Vakuumhülle 16, ein Unterdruck p₀ erzeugt. Dieser kann beispielsweise 50 mbar betragen.

Nach dem Erzeugen des Unterdrucks p₀ wird flüssiges Kunststoffmaterial 32 aus einem Vorratsbehälter 34 über eine Leitung 36 und einen in einem unteren Bereich der Form 10 ausgebildeten Angusskanal 30 in die Form 10 infundiert. Der Vorratsbehälter 34 ist ein Pufferbehälter, in dem jeweils nur eine relativ geringe Menge des flüssigen Kunststoffmaterials 32 angeordnet ist. Weiteres flüssiges Kunststoffmaterial 32 wird während des Infusionsvorgangs über eine Zuleitung 38 zugeführt. Dabei bleibt der Vorratsbehälter 34 mit einem Deckel 40 dichtend verschlossen und der innerhalb des Vorratsbehälters 34 gegebene Infusionsdruck p₃ wird mit Hilfe einer geeigneten Regeleinrichtung über eine Druckleitung 42 konstant gehalten.

Mit Hilfe einer geeigneten Messeinrichtung (nicht dargestellt) wird die Menge des infundierten flüssigen Kunststoffmaterials 32 während der Infusion gemessen. Die Infusion wird beendet, sobald eine vorgegebene Menge des flüssigen Kunststoffmaterials 32 in die Form 10 eingeströmt ist.

Durch die Druckleitung 21 wird Luft zugeführt und innerhalb der Druckhülle 20 ein Überdruck p₂ erzeugt. Dadurch wird das in der Form 10 befindliche Fasermaterial 14 komprimiert, sodass ein vorgegebener Faservolumengehalt erreicht wird.

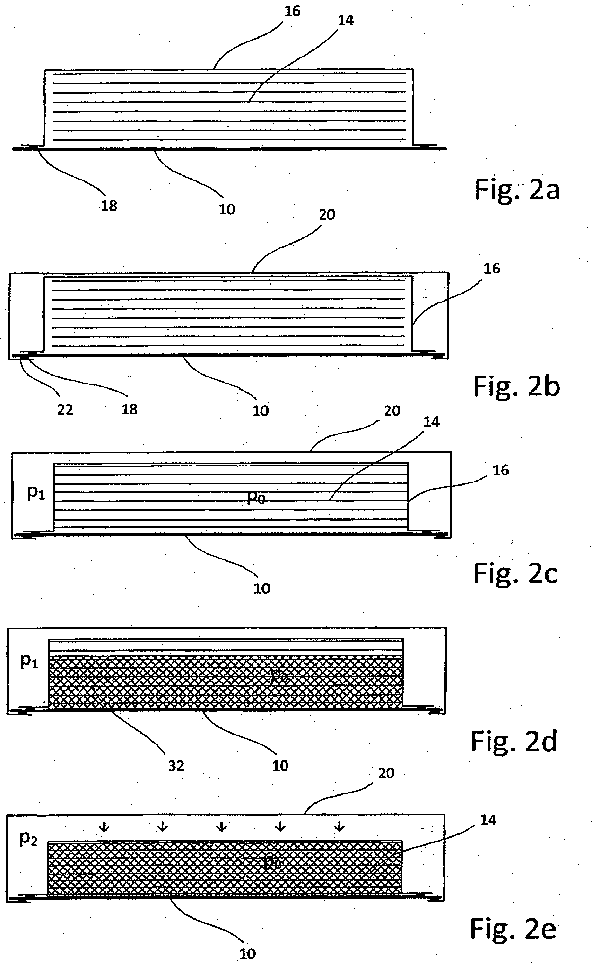

Die Figuren 2a-e zeigen den Ablauf des erfindungsgemäßen Verfahrens anhand der in Figur 1 beschriebenen Vorrichtung. Figur 2a zeigt die Form 10, in die mehrere Lagen eines Fasermaterials 14 eingelegt sind. Die Form 10 wird mit einer Vakuumhülle 16, beispielsweise einer Vakuumfolie, verschlossen. Die Ränder der Vakuumhülle 16 sind unter Einsatz eines Dichtungsmittels 18 luftdicht mit der Form 10 verbunden.

Entsprechend Figur 2b wird nach dem Schließen der Form 10 mit der Vakuumhülle 16 eine Druckhülle 20 auf die Form aufgelegt. Die Ränder 22 der Druckhülle 20 werden ebenfalls mit den Rändern der Form 10 unter Einsatz eines Dichtungsmittels 18 luftdicht mit der Form 10 verbunden, sodass die Druckhülle 20 gegenüber der Form 10 abgedichtet ist.

Entsprechend Figur 2c wird nach dem abdichten der Druckhülle 20 gegenüber der Form 10 die in der Form 10 im Bereich des Fasermaterials 14 befindliche Luft über einen Absaugkanal (nicht dargestellt) abgesaugt und zwischen der Form 10 und der Vakuumhülle 16 ein Unterdruck p₀ erzeugt. Der Druck p₁ unter der Druckhülle 20 entspricht zu diesem Zeitpunkt dem Umgebungsdruck. Der Druck p₁ kann auch leicht über oder unter dem Umgebungsdruck liegen, um unabhängig von Schwankungen des Umgebungsdruck konstante Infusionsbedingungen zu gewährleisten. Die Drücke p₁ und p₀ werden so gewählt, dass zwischen den Lagen des Fasermaterials ausreichend Platz bleibt, um ein Infundieren des Kunststoffmaterials zu ermöglichen.

Entsprechend Figur 2d wird nach dem Erzeugen des Unterdrucks p₀ ein flüssiges Kunststoffmaterial 32 in die Form 10 infundiert. Die Menge des infundierten flüssigen Kunststoffmaterials 32 wird während der Infusion gemessen und die Infusion wird beendet, sobald eine vorgegebene Menge des flüssigen Kunststoffmaterials 32 in die Form 10 eingeströmt ist. Dabei werden im dargestellten Ausführungsbeispiel die, oberen Lagen des Fasermaterials 14 nicht ausreichend mit dem Kunststoffmaterial durchtränkt.

Entsprechend Figur 2e wird nachfolgend innerhalb der Druckhülle 20 ein Überdruck p₂ erzeugt. Dadurch wird das in der Form 10 befindliche Fasermaterial 14 komprimiert, sodass alle Lagen des Fasermaterials 14 mit dem Kunststoffmaterial durchtränkt werden und ein vorgegebener Faservolumengehalt erreicht wird.

### Liste der verwendeten Bezugszeichen:

- 10: Form
- 12: Innenseite
- 14: Fasermaterial
- 16: Vakuumhülle
- 18: Dichtungsmittel
- 20: Druckhülle
- 21: Druckleitung
- 22: Rand der Druckhülle
- 24: Rand der Form
- 26: Klemme
- 28: Absaugkanal
- 30: Angusskanal
- 32: flüssiges Kunststoffmaterial
- 34: Vorratsbehälter
- 36: Leitung
- 38: Zuleitung
- 40: Deckel
- 42: Druckleitung

## Patentansprüche

1. Vakuuminfusionsverfahren mit den Schritten:
• Bereitstellen einer Form (10),
• Einlegen eines Fasermaterials (14) in die Form (10),
• Schließen der Form mit einer Vakuumhülle (16),
• Erzeugen eines Unterdrucks (p₀) in der Form (10),
• Infusion eines flüssigen Kunststoffmaterials (32) in die Form (10),
• Aushärten des flüssigen Kunststoffmaterials (32), **gekennzeichnet durch** die Schritte:
• Umgeben der Vakuumhülle (16) mit einer Druckhülle (20),
• Abdichten der Druckhülle (20) gegenüber der Form (10),
• Erzeugen eines Überdrucks (p₂) innerhalb der Druckhülle (20), **dadurch** gekennzeichnet, dass
• das Verfahren zur Herstellung eines Windenergieanlagenbauteils eingesetzt wird und **durch** den Schritt:
• Steuern des Überdrucks (p2) und/oder des Unterdrucks (p0) derart, dass sich eine konstante Druckdifferenz (p2-p0) zwischen dem Überdruck (p2) und dem Unterdruck (p0) einstellt.

2. Vakuuminfusionsverfahren nach Anspruch 1, **dadurch gekennzeichnet, dass** zum Abdichten der Druckhülle (20) gegenüber der Form (10) ein Rand (22) der Druckhülle (20) und ein Rand (24) der Form (10) aneinander gepresst werden.

3. Vakuuminfusionsverfahren nach einem der Ansprüche 1 oder 2, **dadurch gekennzeichnet, dass** die Druckhülle (20) ein luftdichtes, flexibles Material aufweist.

4. Vakuuminfusionsverfahren nach einem der Ansprüche 1 bis 3, **dadurch gekennzeichnet, dass** die Druckhülle (20) einen Deckel oder eine Haube mit einer festen Geometrie aufweist.

5. Vakuuminfusionsverfahren nach einem der Ansprüche 1 bis 4, **dadurch gekennzeichnet, dass** der Überdruck (p₂) innerhalb der Druckhülle (20) erst dann erzeugt wird, wenn die Infusion des flüssigen Kunststoffmaterials (32) beendet ist.

6. Vakuuminfusionsverfahren nach einem der Ansprüche 1 bis 5, **dadurch gekennzeichnet, dass** während der Infusion des flüssigen Kunststoffmaterials (32) ein Unterdruck innerhalb der Druckhülle (20) erzeugt wird.

7. Vakuuminfusionsverfahren nach einem der Ansprüche 1 bis 6, **dadurch gekennzeichnet, dass** die Infusion des flüssigen Kunststoffmaterials (32) beendet wird, wenn eine vorgegebene Menge des flüssigen Kunststoffmaterials (32) infundiert wurde.

8. Vakuuminfusionsverfahren nach einem der Ansprüche 1 bis 7, **dadurch gekennzeichnet, dass** der Überdruck (p₂) über einen vorgegebenen Zeitraum auf einem konstanten Wert in einem Bereich von 1,0 bar bis 2,0 bar gehalten wird.

9. Vakuuminfusionsverfahren nach einem der Ansprüche 1 bis 8, **dadurch gekennzeichnet, dass** der Überdruck (p2) so gewählt wird, dass ein statischer Druck aufgrund der Gewichtskraft des flüssigen Kunststoffmaterials (32) am tiefsten Punkt der Form (10) kompensiert oder überkompensiert wird.

10. Vakuuminfusionsverfahren nach einem der Ansprüche 1 bis 9, **dadurch gekennzeichnet, dass** eine Temperatur eines zur Erzeugung des Überdrucks (p₂) in die Druckhülle (20) eingebrachten Mediums auf einen vorgegebenem Temperaturwert regelbar ist.

11. Vakuuminfusionsvenfahren nach einem der Ansprüche 1 bis 10, **gekennzeichnet durch** die Schritte:
• luftdichtes Verschließen eines Vorratsbehälters (34), aus dem das flüssige Kunststoffmaterial (32) für die Infusion zugeführt wird, und
• Erzeugen eines definierten Infusionsdrucks (p₃) in dem Vorratsbehälter (34).

12. Vakuuminfusionsverfahren nach Anspruch 11, **gekennzeichnet durch** den Schritt:
• Steuern des Infusionsdrucks (p₃) und/oder des Unterdrucks (p₀) derart, dass sich eine konstante Druckdifferenz (p₃-p₀) zwischen dem Infusionsdruck (p₃) und dem Unterdruck (p₀) einstellt.

13. Vakuuminfusionsverfahren nach einem der Ansprüche 1 bis 12, **dadurch gekennzeichnet, dass** das Windenergieanlagenbauteil ein Windenergieanlagenrotorblattteil ist.

14. Vakuuminfusionsverfahren nach Anspruch 13, **dadurch gekennzeichnet, dass** das Windenergieanlagenrotorblattteil eine Windenergieanlagenrotorblatthalbschale ist.

## Claims

1. A vacuum infusion method comprising the steps of:
• providing a mold (10),
• inserting a fibrous material (14) into the mold (10),
• closing the mold with a vacuum cover (16),
• producing a low pressure (p₀) in the mold (10),
• infusing a liquid plastic material (32) into the mold (10),
• curing the liquid plastic material (32), **characterized by** the steps of:
• surrounding the vacuum cover (16) with a pressure sleeve (20),
• sealing the pressure sleeve (20) in relation to the mold (10),
• producing an overpressure (p₂) within the pressure sleeve (20), **characterized in that**
• the method is used for producing a wind turbine component and **characterized by** the step of:
• controlling the overpressure (p₂) and/or the low pressure (p₀) such that a constant pressure difference (_{P2}-_{P0}) is adjusted between the overpressure (p₂) and the low pressure (p₀).

2. The vacuum infusion method according to Claim 1, **characterized in that** in order to seal the pressure sleeve (20) in relation to the mold (10), an edge (22) of the pressure sleeve (20) and an edge (24) of the mold (10) are pressed against one another.

3. The vacuum infusion method according to any one of Claims 1 or 2, **characterized in that** the pressure sleeve (20) comprises an airtight, flexible material.

4. The vacuum infusion method according to any one of Claims 1 to 3, **characterized in that** the pressure sleeve (20) comprises a lid or a hood with a fixed geometry.

5. The vacuum infusion method according to any one of Claims 1 to 4, **characterized in that** the overpressure (p₂) is not produced within the pressure sleeve (20) until the infusion of the liquid plastic material (32) is completed.

6. The vacuum infusion method according to any one of Claims 1 to 5, **characterized in that** a low pressure is produced within the pressure sleeve (20) during the infusion of the liquid plastic material (32).

7. The vacuum infusion method according to any one of Claims 1 to 6, **characterized in that** the infusion of the liquid plastic material (32) is completed when a given quantity of the liquid plastic material (32) has been infused.

8. The vacuum infusion method according to any one of Claims 1 to 7, **characterized in that** the overpressure (p₂) is kept at a constant value within a range of 1.0 bar to 2.0 bar over a given period of time.

9. The vacuum infusion method according to any one of Claims 1 to 8, **characterized in that** the overpressure (p₂) is selected such that a static pressure is compensated for or overcompensated for due to the weight force of the liquid plastic material (32) at the lowest point of the mold (10).

10. The vacuum infusion method according to any one of Claims 1 to 9, **characterized in that** a temperature of a medium, which is introduced into the pressure sleeve (20) in order to produce the overpressure (p₂), can be regulated to a given temperature value.

11. The vacuum infusion method according to any one of Claims 1 to 10, **characterized by** the steps of:
• airtight sealing of a storage container (34), from which the liquid plastic material (32) is supplied for the infusion, and
• producing a specified infusion pressure (p₃) in the storage container (34).

12. The vacuum infusion method according to Claim 11, **characterized by** the step of:
• controlling the infusion pressure (p₃) and/or the low pressure (p₀) such that a constant pressure difference (p₃-p₀) is adjusted between the infusion pressure (p₃) and the low pressure (p₀).

13. The vacuum infusion method according to any one of Claims 1 to 12, **characterized in that** the wind turbine component is a wind turbine rotor blade part.

14. The vacuum infusion method according to Claim 13, **characterized in that** the wind turbine rotor blade part is a wind turbine rotor blade half-shell.

## Revendications

1. Procédé d'injection sous vide avec les étapes suivantes :
• mise à disposition d'un moule (10),
• pose d'un matériau fibreux (14) dans le moule (10),
• fermeture du moule avec une enveloppe à vide (16),
• génération d'une dépression (p₀) dans le moule (10),
• injection d'une matière plastique liquide (32) dans le moule (10),
• durcissement de la matière plastique liquide (32), **caractérisé par** les étapes suivantes :
• envelopper l'enveloppe à vide (16) avec une enveloppe sous pression (20),
• étanchement de l'enveloppe sous pression (20) par rapport au moule (10),
• génération d'une surpression (p₂) à l'intérieur de l'enveloppe sous pression (20), **caractérisé en ce que**
• le procédé est utilisé pour la fabrication d'un composant d'éolienne et par l'étape :
• régulation de la surpression (p₂) et/ou de la dépression (p₀) de manière à ce qu'une différence de pression (p₂-p₀) constante s'établisse entre la surpression (p₂) et la dépression (p₀).

2. Procédé d'injection sous vide selon la revendication 1, **caractérisé en ce que**, pour l'étanchement de l'enveloppe sous pression (20) par rapport au moule (10), un bord (22) de l'enveloppe sous pression (20) et un bord (24) du moule (10) sont pressés l'un contre l'autre.

3. Procédé d'injection sous vide selon l'une quelconque des revendications 1 ou 2, **caractérisé en ce que** l'enveloppe sous pression (20) présente un matériau souple étanche à l'air.

4. Procédé d'injection sous vide selon l'une quelconque des revendications 1 à 3, **caractérisé en ce que** l'enveloppe sous pression (20) comporte un couvercle ou un capot avec une géométrie fixe.

5. Procédé d'injection sous vide selon l'une quelconque des revendications 1 à 4, **caractérisé en ce que** la surpression (p₂) à l'intérieur de l'enveloppe sous pression (20) n'est générée que lorsque l'injection de la matière plastique liquide (32) est terminée.

6. Procédé d'injection sous vide selon l'une quelconque des revendications 1 à 5, **caractérisé en ce que**, pendant l'injection de la matière plastique liquide (32), une dépression est générée à l'intérieur de l'enveloppe sous pression (20).

7. Procédé d'injection sous vide selon l'une quelconque des revendications 1 à 6, **caractérisé en ce que** l'injection de la matière plastique liquide (32) est terminée lorsqu'une quantité prédéfinie de la matière plastique liquide (32) a été injectée.

8. Procédé d'injection sous vide selon l'une quelconque des revendications 1 à 7, **caractérisé en ce que** la surpression (p₂) est maintenue pendant une période de temps prédéfinie à une valeur constante dans une plage de 1,0 bar à 2,0 bar.

9. Procédé d'injection sous vide selon l'une quelconque des revendications 1 à 8, **caractérisé en ce que** la surpression (p₂) est sélectionnée de manière à ce qu'une pression statique soit compensée ou surcompensée en raison du poids de la matière plastique liquide (32) au point le plus profond du moule (10).

10. Procédé d'injection sous vide selon l'une quelconque des revendications 1 à 9, **caractérisé en ce qu'**une température d'un milieu introduit pour la génération de la surpression (p₂) dans l'enveloppe sous pression (20) est réglable sur une température prédéfinie.

11. Procédé d'injection sous vide selon l'une quelconque des revendications 1 à 10, **caractérisé par** les étapes suivantes :
• fermeture étanche à l'air d'un réservoir (34) à partir duquel la matière plastique liquide (32) est tirée pour l'injection, et
• génération d'un pression d'injection définie (p₃) dans le réservoir (34).

12. Procédé d'injection sous vide selon la revendication 11, **caractérisé par** l'étape suivante :
• régulation de la pression d'injection (p₃) et/ou de la dépression (p₀) de manière à ce qu'une différence de pression (p₃-p₀) constante s'établisse entre la pression d'injection (p₃) et la dépression (p₀).

13. Procédé d'injection sous vide selon l'une quelconque des revendications 1 à 12, **caractérisé en ce que** le composant d'éolienne est une pièce de pale de rotor d'éolienne.

14. Procédé d'injection sous vide selon la revendication 13, **caractérisé en ce que** la pièce de pale de rotor d'éolienne est une demi-coque de pale de rotor d'éolienne.
